# EUROPEAN PATENT SPECIFICATION

(11) **EP 4 074 517 B1**
(45) Date of publication and mention of the grant of the patent: **04.09.2024**
(21) Application number: 21169041.7
(22) Date of filing: 18.04.2021
(51) Int. Cl.: B60B 27/02, B60B 27/04, F16D 41/061, F16D 41/18, F16D 41/32

(54) **FREEHUB OF BICYCLE**
FREILAUFNABE EINES FAHRRADS
ROUE LIBRE DE BICYCLETTE

(43) Date of publication of application: 19.10.2022
(73) Proprietor: Liu, Wei-Ting, Taichung City (TW)
(72) Inventor: Liu, Wei-Ting, Taichung City (TW)
(74) Representative: Cabinet Chaillot

(56) References cited:
- WO-A1-2017/167453
- JP-A- 2011 158 024
- US-A1- 2013 299 293

## Description

### BACKGROUND OF THE INVENTION

A ratchet mechanism of a bicycle contains: a toothed ring, multiple teeth, multiple engagement elements, and multiple resilient elements, wherein the multiple teeth are formed on an accommodation holder, and the multiple teeth are formed on an inner wall of the toothed ring, the multiple engagement elements are rotatably connected with the accommodation holder, wherein the multiple resilient elements push the multiple engagement elements to rotatably engage with the multiple teeth.

The engagement elements are engagement paws or engagement protrusions, wherein when a respective engagement element is an engagement paw, a single tooth is formed on the toothed ring. When the respective engagement element is an engagement protrusion, at least two teeth are formed on the toothed ring.

Furthermore, the respective tooth is formed on an outer wall or an inner wall of the toothed ring so as to engage with the respective engagement element.

The respective engagement element rotatably or linearly engages with the respective tooth.

WO 2017/167453 A1 discloses a freewheel mechanism according to the preamble of claim 1.

### SUMMARY OF THE INVENTION

The primary aspect of the present invention is to provide a freehub of a bicycle which contains the respective engagement element formed in a column shape, and the respective tooth has the arcuate face, such that the respective engagement element contacts with the respective tooth securely so as to enhance a driving force of the freehub.

Secondary aspect of the present invention is to provide a freehub of a bicycle which contains the respective engagement element engaged with the respective tooth to move linearly, and the linear direction of the respective chute is not parallel to the central axis of the rotary shaft, thus enhancing the driving force of the freehub.

Third aspect of the present invention is to provide a freehub of a bicycle which contains the respective engagement element moving linearly to engage with or remove from the respective tooth quickly.

Further aspect of the present invention is to provide a freehub of a bicycle which contains the respective engagement element moving linearly to engage with or to remove from the respective tooth, thus reducing a loss of the driving force of the freehub and avoiding interference between the respective engagement element and the respective tooth.

To obtain above-mentioned aspects, a freehub of a bicycle provided by the present invention according to claim 1 contains: a body, a receiving sleeve, a ratchet assembly, and a toothed ring.

The body is fitted and rotates on a rotary shaft.

The receiving sleeve is connected with a first end of the body and is fitted on the rotary shaft, and the receiving sleeve includes an accommodation holder, the receiving sleeve also including a fixing element corresponding to a second end of the body.

The ratchet assembly is arranged between the body and the receiving sleeve, and the ratchet assembly includes multiple chutes defined thereon and corresponding to the body. A central axis of a respective chute is not parallel to a central axis of the rotary shaft.

The toothed ring is fitted between the fixing element and the body, and the ratchet assembly further includes multiple teeth formed on the toothed ring opposite to the multiple chutes. Preferably, each respective tooth has an arcuate face.

The ratchet assembly further includes multiple engagement elements formed in a column shape, such that the multiple engagement elements abut against the multiple teeth, when the multiple engagement elements engage with the multiple teeth.

The ratchet assembly further includes multiple urging elements, and a respective urging element has at least one part that is in contact with a respective engagement element, wherein a respective urging element is configured to urge a respective engagement element to linearly move toward the respective tooth so as to engage with the respective tooth.

The fixing element is formed in a polygon shape, and the toothed ring has a polygonal orifice defined on a center thereof and fitted with the fixing element.

### BRIEF DESCRIPTION OF THE DRAWINGS

FIG. 1 is a perspective view showing the assembly of a freehub of a bicycle according to a first embodiment of the present invention.
FIG. 2 is a perspective view showing the exploded components of the freehub of the bicycle according to the first embodiment of the present invention.
FIG. 3 is another perspective view showing the exploded components of the freehub of the bicycle according to the first embodiment of the present invention.
FIG. 4 is a cross sectional view showing the assembly of the freehub of the bicycle according to the first embodiment of the present invention.
FIG. 5 is another cross sectional view showing the assembly of the freehub of the bicycle according to the first embodiment of the present invention.
FIG. 6 is a cross sectional view showing the operation of the freehub of the bicycle according to the first embodiment of the present invention.
FIG. 7 is another cross sectional view showing the operation of the freehub of the bicycle according to the first embodiment of the present invention.
FIG. 8 is also another cross sectional view showing the operation of the freehub of the bicycle according to the first embodiment of the present invention.
FIG. 9 is a perspective view showing the assembly of a freehub of a bicycle according to a second embodiment of the present invention.
FIG. 10 is a cross sectional view showing the assembly of the freehub of the bicycle according to the second embodiment of the present invention.
FIG. 11 is another cross sectional view showing the assembly of the freehub of the bicycle according to the second embodiment of the present invention.
FIG. 12 is a perspective view showing the exploded components of a freehub of a bicycle according to a third embodiment of the present invention.
FIG. 13 is a cross sectional view showing the operation of the freehub of the bicycle according to the third embodiment of the present invention.

### DETAILED DESCRIPTION OF THE PREFERRED EMBODIMENTS

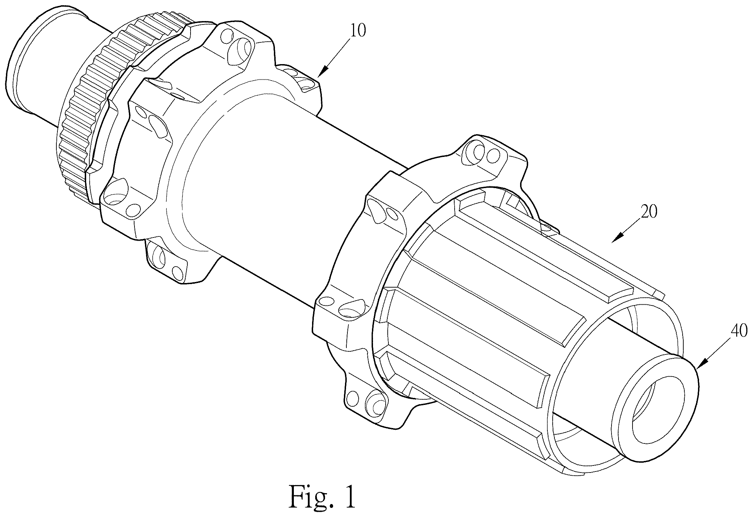

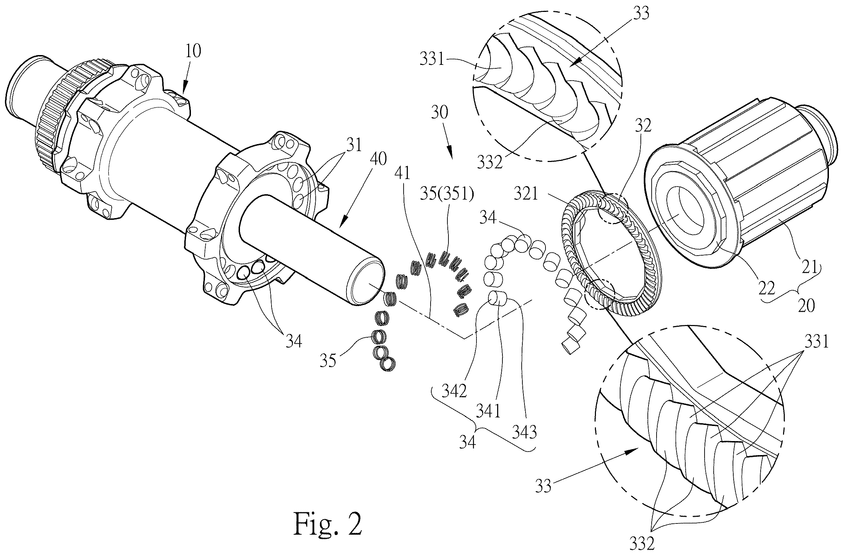

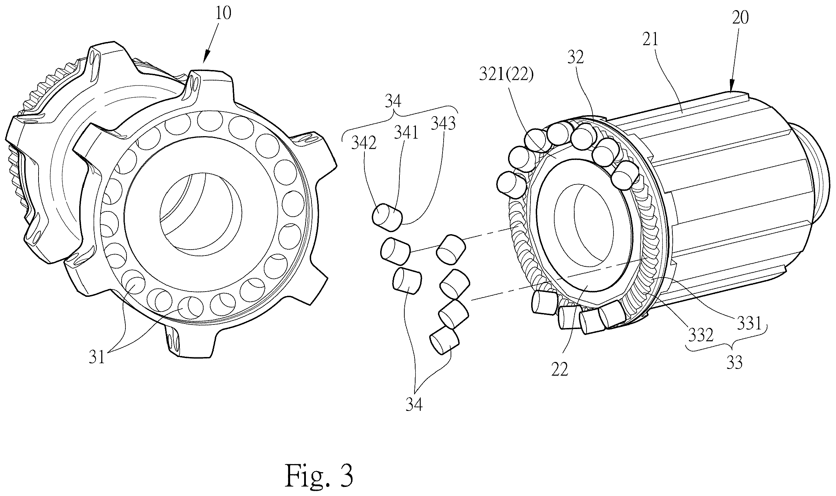

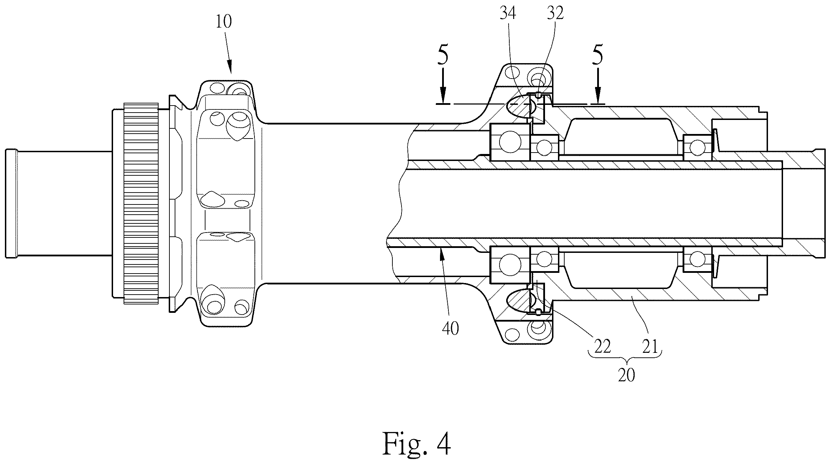

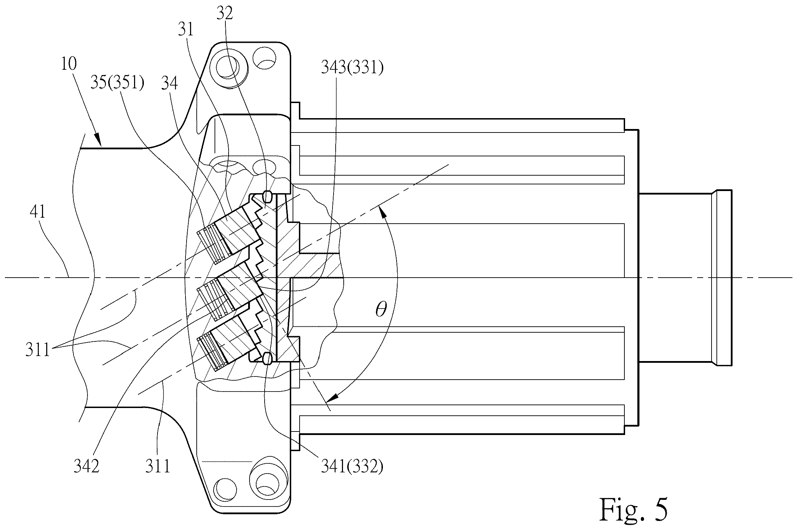

With reference to FIGS. 1-5, a freehub of a bicycle according to a first emdboimdnet of the present invention comprises: a body 10, a receiving sleeve 20 connected with a first end of the body 10, and a ratchet assembly 30 received in the receiving sleeve 20.

The body 10 is fitted and rotates on a rotary shaft 40.

The receiving sleeve 20 is connected with the first end of the body 10 and is fitted on the rotary shaft 40, and the receiving sleeve 20 includes an accommodation holder 21 configured to accommodate a freewheel (not shown), the receiving sleeve 20 also includes a fixing element 22 corresponding to a second end of the body 10 and formed in a polygon shape.

The ratchet assembly 30 is mounted between the body 10 and the receiving sleeve 20, and the ratchet assembly 30 includes multiple chutes 31 defined thereon and corresponding to the body 10, wherein a central axis of a respective chute 31 is not parallel to a central axis 41 of the rotary shaft 41, and the respective chute 31 has a linear direction 311.

A toothed ring 32 is fitted between the fixing element 22 and the body 10, and the toothed ring 32 has a polygonal orifice 321 defined on a center thereof and fitted with the fixing element 22, wherein the ratchet assembly 30 further includes multiple teeth 33 formed on the toothed ring 32 opposite to the multiple chutes 31, wherein a respective tooth 33 has an arcuate face 331 and a tilted face 332 connected with the arcuate face 331.

The ratchet assembly 30 includes multiple engagement elements 34 formed in a column shape and corresponding to the multiple teeth 33, such that the multiple engagement elements 34 abut against multiple arcuate faces 331 of the multiple teeth 33, when the multiple engagement elements 34 engage with the multiple teeth 33. The ratchet assembly 30 further includes multiple resilient elements 35, wherein a respective resilient element 35 abuts against the respective chute 31 and a respective engagement element 34, such that the respective engagement element 34 is urged by the respective resilient element 35 to linearly move toward the respective tooth 33 so as to engage with the respective tooth 33, wherein the respective resilient element 35 is a spring 351, and a first end of the spring 351 abuts against a first edge 342 of the respective engagement element 34 and a bottom of the respective chute 31. The respective engagement element 34 has a peripheral fringe 341, the first edge 342, and a second edge 343 opposite to the first edge 341, wherein the first edge 341 of the respective engagement element 34 contacts with the respective resilient element 35, and the second edge 343 and a part of the peripheral fringe 341 are exposed outside the respective chute 31. The linear direction 311 of the respective chute 31 is a linear moving direction of the respective engagement element 34, and an inclined angle θ is defined between the linear moving direction of the respective engagement element 34 and the tilted face 332 of the respective chute 31, wherein the inclined angle θ is 90 degrees. When the respective engagement element 34 engages with the respective tooth 33, the part of the peripheral fringe 341 exposed outside the respective chute 31 contacts with the respective arcuate face 331, and the second edge 343 exposed outside the respective chute 31 abuts against the tilted face 332. When the respective engagement element 34 contacts with the tilted face 332, the respective engagement element 34 rotates idly so that the tilted face 332 pushes the respective engagement element 34 toward the respective chute 31 linearly.

Thereby, the respective engagement element 34 moves linearly at the inclined angle θ to engage with or remove from the respective tooth 33 easily.

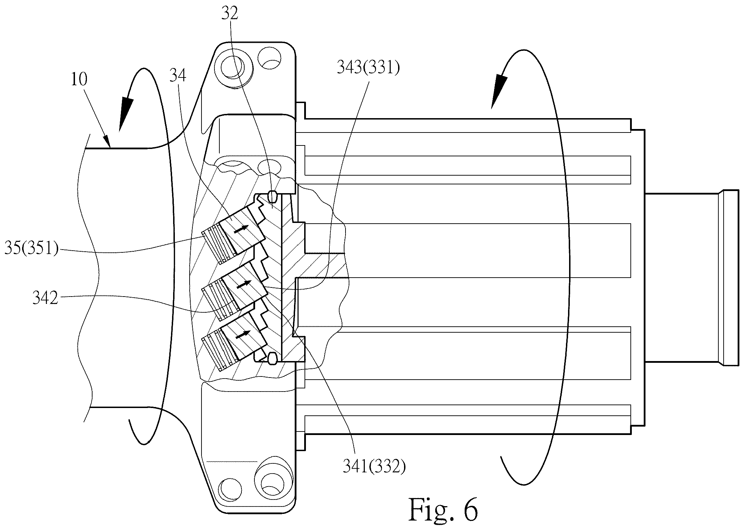

Referring to FIG. 6, the respective engagement element 34 is pushed by the respective resilient element 35 to move toward the respective tooth 33. When the receiving sleeve 20 is actuated, the receiving sleeve 20 rotates with the toothed ring 32 simultaneously. When the toothed ring 32 rotates and the respective engagement element 34 is engaged with the respective tooth 33, the respective engagement element 34, the ratchet assembly 30, and the receiving sleeve 20 are driven by the toothed ring 32 to rotate forward to the bicycle, thus driving a wheel of the bicycle to rotate forward.

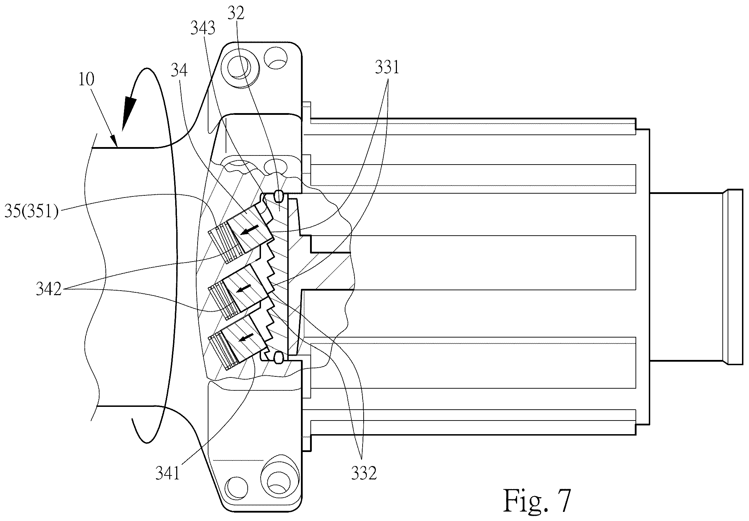

As shown in FIG. 7, the respective engagement element 34 is forced by the respective resilient element 35 to move toward the respective tooth 33, and when the receiving sleeve 20 stops rotation, the toothed ring 32 stops rotation with the receiving sleeve 20, wherein the respective engagement element 34, the ratchet assembly 30, and the receiving sleeve 20 still rotate forward so that the respective engagement element 34 is pushed by the tilted face 332 to remove from the respective tooth 33. After the respective engagement element 34 is not pushed by the tilted face 332, the respective engagement element 34 moves backward to contact with a next tilted face 332, such that the respective engagement element 34 engages with and removes from the respective tooth 33 repeatedly to make noise but not rotate idly, in the meantime, the wheel rotates forward.

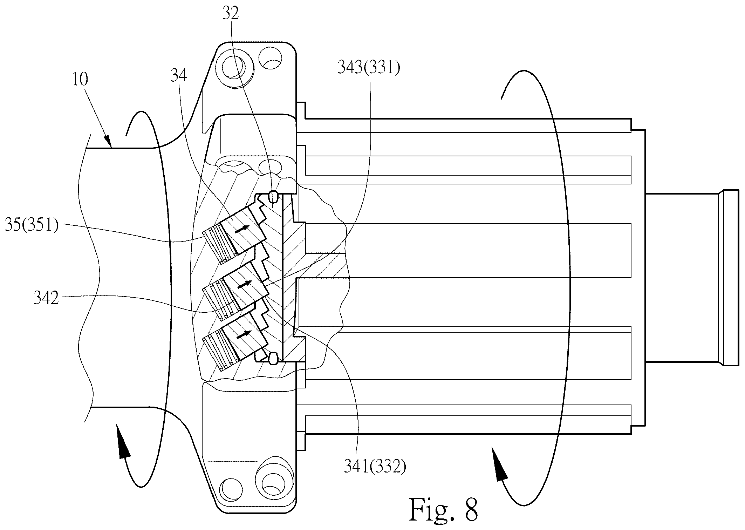

As illustrated in FIG. 8, the respective engagement element 34 engages with the respective tooth 33 and the wheel rotate backward so that the body 10 revolves backward and drives the respective engagement element 34, the ratchet assembly 30, and the receiving sleeve 20 to rotate backward, and the wheel rotates backward.

Thereby, the respective engagement element 34 moves linearly at the inclined angle θ to engage with or remove from the respective tooth 33 easily.

The freehub of a bicycle also has advantages as follows:
1. The respective engagement element 34 is formed in the column shape, and the respective tooth 33 has the arcuate face 331, such that the respective engagement element 34 contacts with the respective tooth 33 so as to enhance a driving force of the freehub.
2. The respective engagement element 34 is engaged with the respective tooth 33 to move linearly, and the linear direction 311 of the respective chute 31 is not parallel to a central axis 41 of the rotary shaft 41, thus enhancing the driving force of the freehub.
3. The respective engagement element 34 moves linearly to engage with or remove from the respective tooth 33 quickly.
4. The respective engagement element 34 moves linearly to engage with or remove from the respective tooth 33, thus reducing a loss of the driving force of the freehub and avoiding interference between the respective engagement element 34 and the respective tooth 33.
5. The respective tooth 33 engages with an inner wall of the toothed ring 32 and moves forward at the inclined angle θ, thus enhancing a rotating speed of the wheel.

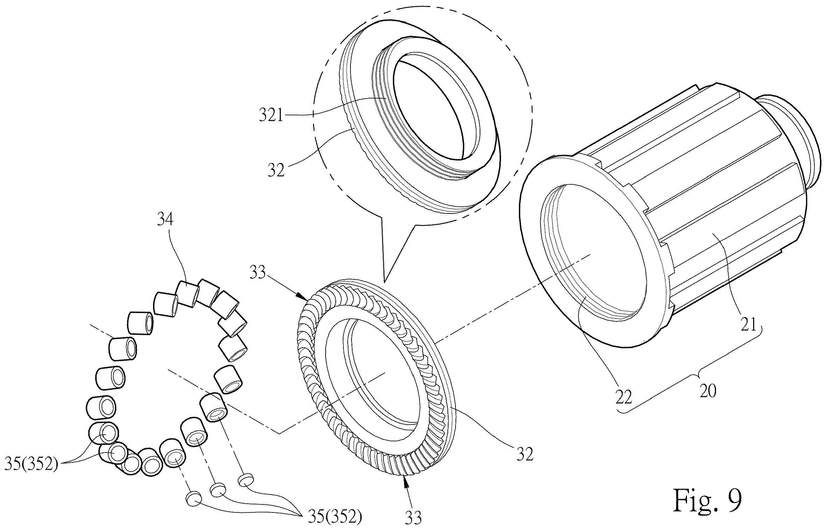

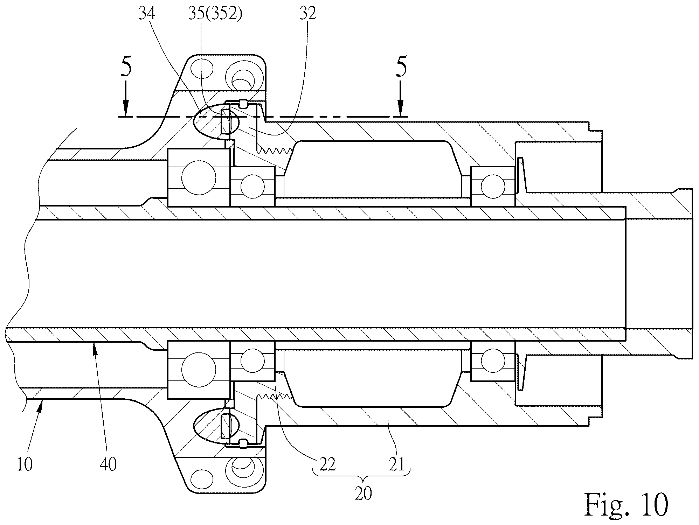

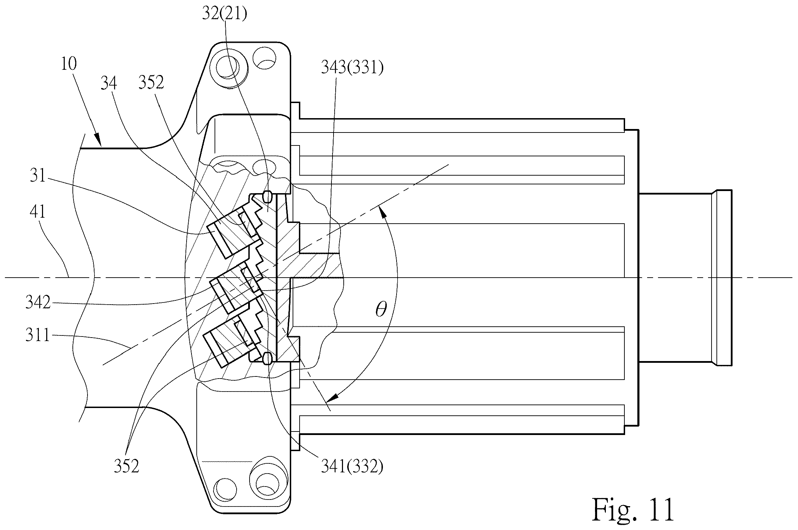

With reference to FIGS. 9-11, in a second embodiment, the toothed ring 32 is screwed with the accommodation holder 21, the respective resilient element 35 is a magnetic element 352 and is fixed on the respective engagement element 34, wherein the toothed ring 32 is made of metal so that the respective magnetic element 352 attracts the toothed ring 32 magnetically, and the respective engagement element 34 moves to the respective tooth 33 linearly.

The receiving sleeve 21 has male threads formed thereon, and the toothed ring 32 has female threads formed thereon so as to screw with the male threads.

The respective resilient element 35 pushes the respective engagement element 34 magnetically so the respective engagement element 34 moves to the toothed ring 32 linearly. When the respective engagement element 34 engages with the arcuate face 331 of the respective tooth 33, the receiving sleeve 21 and the body 10 revolve forward. When the respective engagement element 34 removes from the respective tooth 33, the respective engagement element 34 does not engage with the arcuate face 331 of the respective tooth 33, and the respective engagement element 34 rotates idly, hence the body 10 keeps rotation. Alternatively, when the respective engagement element 34 engages with the respective tooth 33, the body 10 is driven to revolve backward so as to actuate the receiving sleeve 21 and the body 10 to move backward.

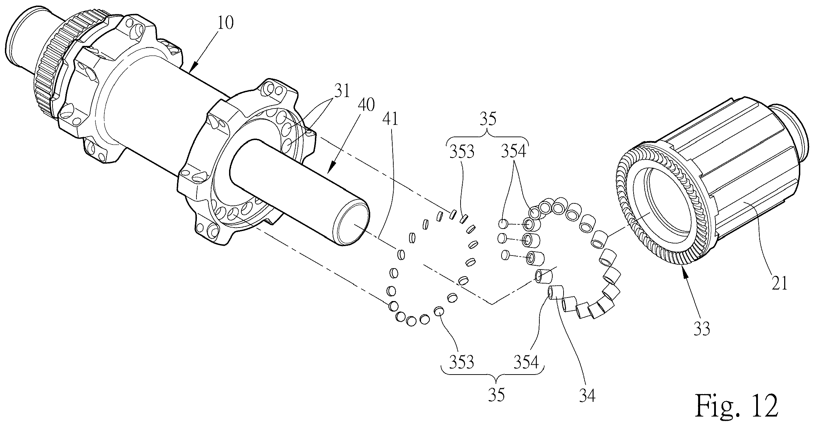

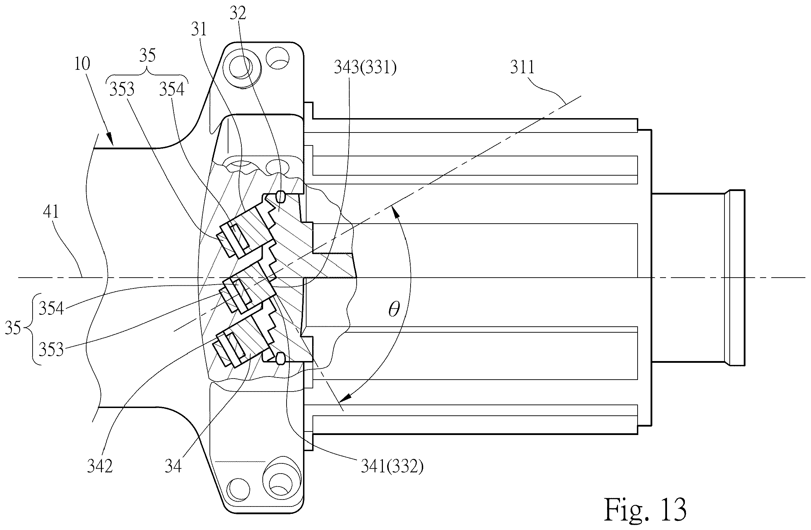

With reference to FIGS. 12 and 13, in a third embodiment, the toothed ring 32 is integrally connected with the receiving sleeve 21. The respective resilient element 35 includes a first magnetic protrusion 353 received in the respective chute 31, and the respective resilient element 35 includes a second magnetic protrusion 354 fixed on the respective engagement element 34 of the respective chute 31, wherein the first magnetic protrusion 353 repels the second magnetic protrusion 354 magnetically, such that the respective engagement element 34 moves to the respective tooth 33 automatically.

The respective tooth 33 is integrally formed in the receiving sleeve 21, and the first magnetic protrusion 353 repels the second magnetic protrusion 354 magnetically so that the respective resilient element 35 pushes the respective engagement element 34 to move toward the toothed ring 32 linearly.

While the preferred embodiments of the invention have been set forth for purpose of disclosure, modifications of the disclosed embodiments of the invention and other embodiments thereof may occur to those skilled in the art. Accordingly, the appended claims are intended to cover all embodiments which do not depart from the scope of the invention.

## Claims

1. A freehub of a bicycle comprising:
a body (10) fitted and rotating on a rotary shaft (40);
a receiving sleeve (20) connected with a first end of the body (10) and fitted on the rotary shaft (40), the receiving sleeve (20) including an accommodation holder (21), the receiving sleeve (20) also including a fixing element (22) corresponding to a second end of the body (10);
a ratchet assembly (30) arranged between the body (10) and the receiving sleeve (20), and the ratchet assembly (30) including multiple chutes (31) defined thereon and corresponding to the body (10), wherein a central axis of a respective chute (31) is not parallel to a central axis of the rotary shaft (40);
a toothed ring (32) fitted between the fixing element (22) and the body (10), and the ratchet assembly (30) further including multiple teeth (33) formed on the toothed ring (32) opposite to the multiple chutes (31), wherein each respective tooth (33) has an arcuate face (331);
the ratchet assembly (30) further including multiple engagement elements (34) formed in a column shape, such that the multiple engagement elements (34) abut against the multiple teeth (33), when the multiple engagement elements (34) engage with the multiple teeth (33);
wherein the ratchet assembly (30) further includes multiple urging elements (35), wherein a respective urging element (35) has at least one part that is in contact with a respective engagement element (34), wherein a respective urging element (35) is configured to urge a respective engagement element (34) to linearly move toward the respective tooth (33) so as to engage with the respective tooth (33),
**characterized in that** the fixing element (22) is formed in a polygon shape, and the toothed ring (32) has a polygonal orifice (321) defined on a center thereof and fitted with the fixing element (22).

2. The freehub as claimed in claim 1, wherein it is configured so that when the receiving sleeve (20) is actuated, the receiving sleeve (20) rotates with the toothed ring (32) simultaneously, when the toothed ring (32) rotates and the respective engagement element (34) is engaged with the respective tooth (33), the respective engagement element (34), the ratchet assembly (30), and the receiving sleeve (20) are driven by the toothed ring (32) to rotate forward to the bicycle, thus driving a wheel of the bicycle to rotate forward; when the receiving sleeve (20) rotates in an opposite direction, the fixing element (22) and the toothed ring (32) revolve in the opposite same simultaneously, and the respective tooth (33) of the toothed ring (32) does not engage with the respective engagement element (34) but rotate idly.

3. The freehub as claimed in claim 1, wherein the toothed ring (32) is screwed with the accommodation holder (21).

4. The freehub as claimed in claim 1, wherein the toothed ring (32) is integrally connected with the receiving sleeve (20).

5. The freehub as claimed in claim 1, wherein the respective tooth (33) has an arcuate face (331) and a tilted face (332) connected with the arcuate face (331), the respective engagement element (34) has a peripheral fringe (341), the first edge (342), and a second edge (343) opposite to the first edge (342), wherein the urging elements (35) are resilient elements (35) each abutting against the respective chute (31), wherein the first edge (342) of the respective engagement element (34) contacts with the respective resilient element (35), and the second edge (343) and a part of the peripheral fringe (341) are exposed outside the respective chute (31); when the respective engagement element (34) engages with the respective tooth (33), the part of the peripheral fringe (341) exposed outside the respective chute (31) contacts with the respective arcuate face (331), and the second edge (343) exposed outside the respective chute (31) abuts against the tilted face (332).

6. The freehub as claimed in claim 1, wherein the respective tooth (33) has an arcuate face (331) and a tilted face (332) connected with the arcuate face (331), the respective chute (31) has a linear direction defined on a central axis thereof, and the linear direction of the respective chute (31) is a linear moving direction of the respective engagement element (34), wherein an inclined angle θ is defined between the linear moving direction of the respective engagement element (34) and the tilted face (332) of the respective chute (31).

7. The freehub as claimed in claim 6, wherein the inclined angle θ is 90 degrees.

8. The freehub as claimed in claim 1, wherein the urging elements (35) are resilient elements (35) each abutting against the respective chute (31), wherein each resilient elements (35) is a spring.

9. The freehub as claimed in claim 1, wherein the respective urging element (35) is a magnetic element (352) and is fixed on the respective engagement element (34), wherein the toothed ring (32) is made of metal so that the respective magnetic element (352) attracts the toothed ring (32) magnetically, and the respective engagement element (34) moves to the respective tooth (33) linearly.

10. The freehub as claimed in claim 1, wherein the respective urging element (35) includes a first magnetic protrusion (353) received in the respective chute (31), and the respective urging element (35) includes a second magnetic protrusion (352) fixed on the respective engagement element (34) of the respective chute (31), wherein the first magnetic protrusion (353) repels the second magnetic protrusion (352) magnetically, such that the respective engagement element (34) moves to the respective tooth (33) automatically.

## Patentansprüche

1. - Freilaufnabe eines Fahrrads, umfassend:
einen Körper (10), der an einer Drehwelle (40) angebracht ist und dreht;
eine Aufnahmehülse (20), die mit einem ersten Ende des Körpers (10) verbunden und an der Drehwelle (40) angebracht ist, wobei die Aufnahmehülse (20) einen Aufnahmehalter (21) beinhaltet und die Aufnahmehülse (20) ferner ein Befestigungselement (22) aufweist, das einem zweiten Ende des Körpers (10) entspricht;
eine Sperrklinkenanordnung (30), die zwischen dem Körper (10) und der Aufnahmehülse (20) angeordnet ist, und wobei die Sperrklinkenanordnung (30) mehrere an ihr definierte und dem Körper (10) entsprechende Schächte (31) beinhaltet, wobei eine Mittelachse eines jeweiligen Schachts (31) nicht parallel zu einer Mittelachse der Drehwelle (40) ist;
einen Zahnring (32), der zwischen dem Befestigungselement (22) und dem Körper (10) angebracht ist, und wobei die Sperrklinkenanordnung (30) ferner mehrere Zähne (33) beinhaltet, die auf dem Zahnring (32) gegenüber den mehreren Schächten (31) gebildet sind, wobei jeder jeweilige Zahn (33) eine bogenförmige Fläche (331) aufweist;
wobei die Sperrklinkenanordnung (30) ferner mehrere Eingriffselemente (34) beinhaltet, die in einer Säulenform gebildet sind, sodass die mehreren Eingriffselemente (34) an den mehreren Zähnen (33) anliegen, wenn die mehreren Eingriffselemente (34) mit den mehreren Zähnen (33) eingreifen;
wobei die Sperrklinkenanordnung (30) ferner mehrere Presselemente (35) beinhaltet, wobei ein jeweiliges Presselement (35) mindestens einen Teil aufweist, der mit einem jeweiligen Eingriffselement (34) in Kontakt ist, wobei ein jeweiliges Presselement (35) konfiguriert ist, um ein jeweiliges Eingriffselement (34) presst, um sich linear in Richtung des jeweiligen Zahns (33) zu bewegen, um den jeweiligen Zahn (33) einzugreifen,
**dadurch gekennzeichnet, dass** das Befestigungselement (22) in einer Polygonform gebildet ist und der Zahnring (32) eine polygonale Öffnung (321) aufweist, die in einer Mitte davon definiert und an dem Befestigungselement (22) angebracht ist.

2. - Freilaufnabe nach Anspruch 1, wobei sie konfiguriert ist, sodass, wenn die Aufnahmehülse (20) betätigt wird, die Aufnahmehülse (20) gleichzeitig mit dem Zahnring (32) dreht, wenn der Zahnring (32) dreht und das jeweilige Eingriffselement (34) mit dem jeweiligen Zahn (33) eingreift, das jeweilige Eingriffselement (34), die Sperrklinkenanordnung (30) und die Aufnahmehülse (20) durch den Zahnring (32) angetrieben werden, um vorwärts zu dem Fahrrad zu drehen, wodurch ein Rad des Fahrrads angetrieben wird, um vorwärts zu drehen; wenn die Aufnahmehülse (20) in eine entgegengesetzte Richtung dreht, drehen das Befestigungselement (22) und der Zahnring (32) gleichzeitig in die entgegengesetzte Richtung, und der jeweilige Zahn (33) des Zahnrings (32) greift nicht in das jeweilige Eingriffselement (34) ein, sondern dreht im Leerlauf.

3. - Freilaufnabe nach Anspruch 1, wobei der Zahnring (32) mit dem Aufnahmehalter (21) verschraubt ist.

4. - Freilaufnabe nach Anspruch 1, wobei der Zahnring (32) einstückig mit der Aufnahmehülse (20) verbunden ist.

5. - Freilaufnabe nach Anspruch 1, wobei der jeweilige Zahn (33) eine bogenförmige Fläche (331) und eine mit der bogenförmigen Fläche (331) verbundene schräge Fläche (332) aufweist, das jeweilige Eingriffselement (34) einen Umfangsrand (341), den ersten Rand (342) und einen zweiten Rand (343) gegenüber dem ersten Rand (342) aufweist, wobei die Presselemente (35) elastische Elemente (35) sind, die jeweils an dem jeweiligen Schacht (31) anliegen, wobei der erste Rand (342) des jeweiligen Eingriffselements (34) mit dem jeweiligen elastischen Element (35) in Kontakt ist, und der zweite Rand (343) und ein Teil des Umfangsrands (341) außerhalb des jeweiligen Schachts (31) freiliegen; wenn das jeweilige Eingriffselement (34) den jeweiligen Zahn (33) eingreift, berührt der Teil des Umfangsrands (341), der außerhalb des jeweiligen Schachts (31) freiliegt, die jeweilige bogenförmige Fläche (331), und die zweite Kante (343), die außerhalb des jeweiligen Schachts (31) freiliegt, liegt an der geneigten Fläche (332) an.

6. - Freilaufnabe nach Anspruch 1, wobei der jeweilige Zahn (33) eine bogenförmige Fläche (331) und eine mit der bogenförmigen Fläche (331) verbundene geneigte Fläche (332) aufweist, der jeweilige Schacht (31) eine lineare Richtung aufweist, die auf einer Mittelachse davon definiert ist, und die lineare Richtung des jeweiligen Schachts (31) eine lineare Bewegungsrichtung des jeweiligen Eingriffselements (34) ist, wobei ein geneigter Winkel θ zwischen der linearen Bewegungsrichtung des jeweiligen Eingriffselements (34) und der geneigten Fläche (332) des jeweiligen Schachts (31) definiert ist.

7. - Freilaufnabe nach Anspruch 6, wobei der Neigungswinkel θ 90 Grad ist.

8. - Freilaufnabe nach Anspruch 1, wobei die Presselemente (35) elastische Elemente (35) sind, die jeweils an dem jeweiligen Schacht (31) anliegen, wobei jedes elastische Element (35) eine Feder ist.

9. - Freilaufnabe nach Anspruch 1, wobei das jeweilige Presselement (35) ein magnetisches Element (352) ist und an dem jeweiligen Eingriffselement (34) befestigt ist, wobei der Zahnring (32) aus Metall gefertigt ist, sodass das jeweilige magnetische Element (352) den Zahnring (32) magnetisch anzieht und sich das jeweilige Eingriffselement (34) linear zu dem jeweiligen Zahn (33) bewegt.

10. - Freilaufnabe nach Anspruch 1, wobei das jeweilige Presselement (35) einen ersten magnetischen Vorsprung (353) beinhaltet, der in dem jeweiligen Schacht (31) aufgenommen ist, und das jeweilige Presselement (35) einen zweiten magnetischen Vorsprung (352) beinhaltet, der an dem jeweiligen Eingriffselement (34) des jeweiligen Schachts (31) befestigt ist, wobei der erste magnetische Vorsprung (353) den zweiten magnetischen Vorsprung (352) magnetisch abstößt, sodass sich das jeweilige Eingriffselement (34) automatisch zu dem jeweiligen Zahn (33) bewegt.

## Revendications

1. - Roue libre d'une bicyclette, comprenant :
un corps (10) monté et tournant sur un arbre de rotation (40) ;
un manchon de réception (20) relié à une première extrémité du corps (10) et monté sur l'arbre de rotation (40), le manchon de réception (20) comprenant un support de logement (21), le manchon de réception (20) comprenant également un élément de fixation (22) correspondant à une seconde extrémité du corps (10) ;
un ensemble à cliquet (30) disposé entre le corps (10) et le manchon de réception (20), et l'ensemble à cliquet (30) comprenant de multiples goulottes (31) définies sur celui-ci et correspondant au corps (10), un axe central d'une goulotte (31) respective n'étant pas parallèle à un axe central de l'arbre de rotation (40) ;
une couronne dentée (32) montée entre l'élément de fixation (22) et le corps (10), et l'ensemble à cliquet (30) comprenant en outre de multiples dents (33) formées sur la couronne dentée (32) en regard des multiples goulottes (31), chaque dent (33) respective ayant une face arquée (331) ;
l'ensemble à cliquet (30) comprenant en outre de multiples éléments d'engagement (34) réalisés sous forme de colonnes, de telle sorte que les multiples éléments d'engagement (34) viennent en butée contre les multiples dents (33), lorsque les multiples éléments d'engagement (34) s'engagent avec les multiples dents (33) ;
l'ensemble à cliquet (30) comprenant en outre de multiples éléments de poussée (35), un élément de poussée (35) respectif ayant au moins une partie qui est en contact avec un élément d'engagement (34) respectif, un élément de poussée (35) respectif étant configuré pour pousser un élément d'engagement (34) respectif en déplacement linéaire vers la dent (33) respective de façon à s'engager avec la dent (33) respective,
**caractérisée par le fait que** l'élément de fixation (22) réalisé sous une forme polygonale et la couronne dentée (32) a un orifice polygonal (321) défini à un centre de celle-ci et monté avec l'élément de fixation (22).

2. - Roue libre selon la revendication 1, étant configurée de telle sorte que, lorsque le manchon de réception (20) est actionné, le manchon de réception (20) tourne avec la couronne dentée (32) simultanément, lorsque la couronne dentée (32) tourne et l'élément d'engagement (34) respectif est engagé avec la dent (33) respective, l'élément d'engagement (34) respectif, l'ensemble à cliquet (30) et le manchon de réception (20) sont entraînés par la couronne dentée (32) en rotation en marche avant de la bicyclette, entraînant ainsi une roue de la bicyclette en rotation en marche avant ; lorsque le manchon de réception (20) tourne dans un sens opposé, l'élément de fixation (22) et la couronne dentée (32) tournent simultanément dans le sens opposé, et la dent (33) respective de la couronne dentée (32) ne s'engage pas avec l'élément d'engagement (34) respectif, mais tourne à vide.

3. - Roue libre selon la revendication 1, dans laquelle la couronne dentée (32) est vissée au support de logement (21).

4. - Roue libre selon la revendication 1, dans laquelle la couronne dentée (32) est reliée d'un seul tenant au manchon de réception (20).

5. - Roue libre selon la revendication 1, dans laquelle la dent (33) respective a une face arquée (331) et une face inclinée (332) reliée à la face arquée (331), l'élément d'engagement (34) respectif a une bordure périphérique (341), le premier bord (342), et un second bord (343) opposé au premier bord (342), les éléments de poussée (35) étant des éléments élastiques (35) venant chacun en butée contre la goulotte (31) respective, le premier bord (342) de l'élément d'engagement (34) respectif étant en contact avec l'élément élastique (35) respectif, et le second bord (343) et une partie de la bordure périphérique (341) étant exposés à l'extérieur de la goulotte (31) respective ; lorsque l'élément d'engagement (34) respectif est engagé avec la dent (33) respective, la partie de la bordure périphérique (341) exposée à l'extérieur de la goulotte (31) respective entre en contact avec la face arquée (331) respective, et le second bord (343) exposé à l'extérieur de la goulotte (31) respective vient en butée contre la face inclinée (332).

6. - Roue libre selon la revendication 1, dans laquelle la dent (33) respective a une face arquée (331) et une face inclinée (332) reliée à la face arquée (331), la goulotte (31) respective a une direction linéaire définie sur un axe central de celle-ci, et la direction linéaire de la goulotte (31) respective est une direction de déplacement linéaire de l'élément d'engagement (34) respectif, un angle incliné θ étant défini entre la direction de déplacement linéaire de l'élément d'engagement (34) respectif et la face inclinée (332) de la goulotte (31) respective.

7. - Roue libre selon la revendication 6, dans laquelle l'angle incliné θ est de 90 degrés.

8. - Roue libre selon la revendication 1, dans laquelle les éléments de poussée (35) sont des éléments élastiques (35) venant chacun en butée contre la goulotte (31) respective, chaque élément élastique (35) étant un ressort.

9. - Roue libre selon la revendication 1, dans laquelle l'élément de poussée (35) respectif est un élément magnétique (352) et est fixé sur l'élément d'engagement (34) respectif, la couronne dentée (32) étant fait de métal de telle sorte que l'élément magnétique (352) respectif attire la couronne dentée (32) magnétiquement, et l'élément d'engagement (34) respectif se déplace vers la dent (33) respective de manière linéaire.

10. - Roue libre selon la revendication 1, dans laquelle l'élément de poussée (35) respectif comprend une première saillie magnétique (353) reçue dans la goulotte (31) respective, et l'élément de poussée (35) respectif comprend une seconde saillie magnétique (352) fixée sur l'élément d'engagement (34) respectif de la goulotte (31) respective, la première saillie magnétique (353) repousse la seconde saillie magnétique (352) magnétiquement, de telle sorte que l'élément d'engagement (34) respectif se déplace automatiquement vers la dent (33) respective.
